# EUROPEAN PATENT SPECIFICATION

(11) **EP 3 614 863 B1**
(45) Date of publication and mention of the grant of the patent: **16.10.2024**
(21) Application number: 18720616.4
(22) Date of filing: 27.04.2018
(51) Int. Cl.: A23L 13/40, A23L 27/21, A23L 27/27

(54) **PROCESS FOR PRODUCING LIQUID SMOKE REACTION PRODUCTS**
VERFAHREN ZUR HERSTELLUNG FLÜSSIGER RAUCHREAKTIONSPRODUKTE
PROCÉDÉ DE PRODUCTION DES PRODUITS DE RÉACTION DE FUMÉE LIQUIDE

(30) Priority: 28.04.2017 US 201762491630 P
(43) Date of publication of application: 04.03.2020
(73) Proprietor: Kerry Group Services International Limited, Tralee Co. Kerry (IE)
(72) Inventor: TORAASON, Joseph, Manitowoc Wisconsin 54220 (US); LANDAY, Richard, Manitowoc Wisconsin 54220 (US)
(74) Representative: FRKelly
(86) International application number: PCT/EP2018/060973
(87) International publication number: WO 2018/197707

(56) References cited:
- CN-A- 106 376 897
- GB-A- 855 350
- RIHA ET AL: "Browning potential of liquid smoke solutions : comparison of two methods", JOURNAL OF FOOD SCIENCE, WILEY-BLACKWELL PUBLISHING, INC, US, vol. 58, no. 3, 1 January 1993 (1993-01-01), pages 671 - 674, XP002098053, ISSN: 0022-1147, DOI: 10.1111/J.1365-2621.1993.TB04353.X
- DATABASE GNPD [online] MINTEL; September 2012 (2012-09-01), ANONYMOUS: "Liquid Smoke", XP002782767, Database accession no. 1892106
- DATABASE GNPD [online] MINTEL; November 2015 (2015-11-01), ANONYMOUS: "Natural Liquid Smoke Seasoning", XP002782768, Database accession no. 3517563
- BRANDT L A: "Liquid smokes solve formulation problems", PREPARED F, GORMAN PUB., CHICAGO, IL, US, vol. 170, no. 2, 1 February 2001 (2001-02-01), pages 59, XP008133056, ISSN: 0747-2536
- NAIM MONTAZERI ET AL: "Chemical characterization of commercial liquid smoke products", FOOD SCIENCE & NUTRITION, vol. 1, no. 1, 23 December 2012 (2012-12-23), pages 102 - 115, XP055428980, ISSN: 2048-7177, DOI: 10.1002/fsn3.9
- DOS SANTOS ALVES LARISSA APARECIDA AGOSTINHO ET AL: "Impact of lysine and liquid smoke as flavor enhancers on the quality of low-fat Bologna-type sausages with 50% replacement of NaCl by KCl", MEAT SCIENCE, ELSEVIER SCIENCE, GB, vol. 123, 5 September 2016 (2016-09-05), pages 50 - 56, XP029827775, ISSN: 0309-1740, DOI: 10.1016/J.MEATSCI.2016.09.001
- RIHA W E ET AL: "INFLUENCE OF PROCESSING CONDITIONS ON SURFACE COLOR OF LIQUID SMOKE-TREATED CHEESE", JOURNAL OF DAIRY SCIENCE, AMERICAN DAIRY SCIENCE ASSOCIATION, US, vol. 75, no. SUPPL 01, 1 June 1992 (1992-06-01), pages 124, XP000256905, ISSN: 0022-0302
- VARLET VINCENT SEROT THIERRY PROST CAROLE NOLLET LEO M L ET AL: "Chapter 15: Smoke Flavoring Technology in Seafood", 24 November 2009, HANDBOOK OF SEAFOOD AND SEAFOOD PRODUCTS ANALYSIS, CRC PRESS, US, PAGE(S) 233 - 254, ISBN: 978-1-4200-4635-9, XP009506612

## Description

### BACKGROUND OF THE DISCLOSURE

### 1. Field of the Disclosure

The presently disclosed subject matter relates to methods and compositions for impacting properties of food and beverage products, for example, flavor, aroma, color, and protein binding, More particularly, the presently disclosed subject matter relates to liquid smoke reaction products, methods for preparing liquid smoke reaction products, and foods and beverages treated with smoke reaction products. The presently disclosed liquid smoke reaction products have unique properties that result from reactions of liquid smoke compositions and amino acids under various conditions.

### 2. Background

Conventional reaction flavors have been used to impart, savory, meaty, or yeasty flavors to final food and beverage products. Conventional reaction flavors are usually added at a low percentage through seasoning blend, marinade, or injection. Other delivery methods can be used, but the system must be able to handle runoff and retain flavor. These conventional reaction flavors have been used in final food and beverage products as an enhancement to their cooking method and to amplify existing seasoning.

Conventional reaction flavors were produced through a reaction of reducing sugars, such as dextrose, xylose, and fructose, with amino acids. This reaction between amino acids and reducing sugars is referred to as the "Maillard reaction" and gives food distinctive cooked flavors resulting from heating. In this reaction, carbonyl compounds, especially reducing sugars, react with compounds having free amino groups, such as amines, amino acids, and proteins.

While conventional reaction flavors have been used in certain applications, they are limited in multiple respects. For example, conventional reaction flavors provide a narrow flavor, color, and aroma profile. These profiles are directly correlated to the initial sugars and amino acids used, and sub-variations created by pH adjustment, temperatures, and process times. Generally, conventional reaction flavors have a sweet or savory aroma and flavor.

As a further limitation, conventional reaction flavors do not adhere to a protein surface using current manufacturing processes (i.e., drenching, atomization, showering). Instead, they leach off or wash off the surface of a product during manufacturing.

Emulsifiers, such as polysorbate, propylene glycol, and lecithin, have been used to help conventional reaction flavors adhere to a protein surface, but produce unsatisfactory results. While the addition of these emulsifiers make the conventional reaction flavors more homogeneous, the conventional reaction flavors still do not have phenolic compounds and still do not bind to a protein surface. As such, the resulting reaction emulsifier mixture is liable to runoff and purge during the cook cycle, leaving a diminished color and flavor.

Liquid smoke (referred to herein as "LS") solutions / compositions are alternative agents that are used to impart particular flavors, aromas, and properties to food products. LS solutions are liquid condensates that are capable of imparting smoky hue or coloration and smoky flavor to a food product exposed to a liquid or vapor phase of the solution. LS has conventionally been used to develop dark color in food products via staining on meat surfaces with limited cooking and drying time. LS has an affinity for protein because of the phenol content and works well for adhesion in casings. LS solutions that work most efficiently at staining a product have alkaline pH values.

Like conventional reaction flavors, LS solutions also have certain limitations that preclude their use outside of particular applications. One limitation of LS solutions is their unique flavor. LS solutions have a very strong smoky, ashy, and caustic bitter flavor. In many applications, however, light flavor or no flavor is desirable. Moreover, it is generally desirable for reaction flavors to have pH less than 7, in order to replicate food systems. LS solutions, however, typically have alkaline pH values. Those skilled in the art know that high pH reaction flavors also have an undesirable flavor in most applications.

GB855350 relates to a process for the preparation of a flavouring substance which comprises reacting an amino reagent comprising cysteine with fractionated liquid wood smoke at an elevated temperature in the presence of water. CN 10637689 7relates to a smoked beef flavor crisp pine nut, and in particular, to a smoked beef flavor crisp pine nut and a preparation method therefor. *Riha et al.* (1993) relates to the color-forming potential of carbonyl compounds from liquid smoke solutions with selected amino acids by a colori-metric procedure.

What is needed, then, are reaction flavors having expanded flavor, color, and aroma profiles from what is available in conventional reaction flavors and LS solutions. Additionally, there is a need for reaction flavors having improved protein binding, without the bitter flavor of LS.

### BRIEF SUMMARY OF THE DISCLOSURE

The disclosed LS reaction products overcome a variety of problems in the related art of reaction flavors. Contrary to conventional reaction flavors, the present disclosure encompasses unique flavor, color, and aroma profiles produced through reaction of LS compositions and amino acids. The presently disclosed subject matter provides processes for preparing LS reaction products, as well as LS reaction products, as well as foods and beverages treated with LS reaction products. Examples of embodiments of the disclosure described below may overcome the above disadvantages and other disadvantages not described above.

The invention provides processes for preparing LS reaction products, as described herein. The processes include the steps of preparing a reaction solution that includes a LS and an amino acid and heating the reaction solutionto a temperature between 85°C and 150°C for 5 to 120 minutes;
wherein the liquid smoke composition has:
a titratable acidity level in a concentration of less than about 25% weight per unit volume (w/v);
a carbonyl content of greater than about 1% and up to about 80% weight per unit volume (w/v);
a phenol content in a concentration of greater than about 0.25 mg/mL; and
a pH of less than about 7.0. The invention is disclosed in the appended claims.

In another aspect, the presently disclosed subject matter provides LS reaction products, which exhibit unique flavor, color, and aroma profiles, as well as beneficial properties, such as excellent protein binding.

In another aspect, the presently disclosed subject matter provides processes for treating a food or beverage product with LS reaction products. The processes include contacting food or beverage products with a LS reaction product.

In yet another aspect, the presently disclosed subject matter provides food or beverage products treated with LS reaction products.

### DETAILED DESCRIPTION

The disclosed LS reaction products improve upon conventional reaction flavors and LS solutions by combining the variability and customization of conventional reaction flavors with the functionality of LS. The disclosed LS reaction products exhibit a unique flavor profile that may, for example, be nutty, smoky, or charry. The LS reaction products also exhibit a depth and breadth of color that is unique from conventional reactions of reducing sugars and amino acids. The disclosed LS reaction products also exhibit additional functionalities compared to conventional reaction flavors, including, but not limited to, protein binding, antimicrobial properties, emulsification enhancement, and post cook browning.

More particularly, the LS reaction products have a new, unique reaction flavor profile that is not available on the market today, without blending several savory reaction flavors and LS solutions separately. The LS reaction products also have improved properties compared to conventional reaction flavors, such as improved adhesion to protein-based products, allowing the LS reaction products to pass through multiple process steps without purging or leaching. The LS reaction products also exhibit unique flavors that can be, for example, nutty, smoky, or charry, as well as unique aromas, and a unique depth and breadth of color, compared to what was conventionally available through conventional reactions of sugars and amino acids.

Unlike conventional reaction flavors, the LS reaction products do not depend on sugar as one of the key drivers in the Maillard reaction. Instead the reaction utilizes the variety of carbonyl-containing compounds that are naturally occurring in LS and its derivatives. Reaction of the array of carbonyl compounds within LS with amino acids provides a novel and unique breadth of flavor profiles and a dark robust color palette, which were not previously available.

Furthermore, unlike conventional reaction flavors, the disclosed LS reaction products bind to protein structure instead of separating and leaching out of the surface of a product. Whereas conventional food and beverage systems required the inclusion of additives to achieve such functionality, the disclosed LS reaction products surprisingly exhibit excellent protein binding, without the addition emulsifiers, additives, or adherents. The disclosed LS reaction products achieve excellent protein binding through reaction of as few as two ingredients - LS and amino acids.

### Liquid Smokes

The disclosed LS reaction products are prepared from reaction of LS compositions and amino acids. LS compositions known in the art may be used as starting materials. For example, non-limiting varieties of LS compositions include aqueous liquid smokes, oil-soluble smokes and dry smoke powders. Preferred LS compositions are aqueous smokes, which would include but not be limited to primary smokes, concentrated smokes, and buffered/neutral smokes. As is known in the art, LS compositions are the condensed products from the destructive distillation of wood. LS compositions are obtained from pyrolysis of hardwood sawdust and contain constituents primarily from the thermal degradation of cellulose, hemicellulose, and lignin. U.S. Patent No. 3,106,473 to Hollenbeck describes a typical commercial preparation of LS compositions for surface applications to foodstuffs.

As described in U.S. Patent No. 3,106,473 to Hollenbeck, the commercial production of LS compositions typically begins with smoke made by pyrolysis and limited combustion of wood. Pyrolysis produces condensable liquids, non-condensable gases, and solids in varying proportions, depending on reaction conditions. The condensable liquids from pyrolyzed wood can be further subdivided into water soluble organics and water insoluble tars.

After pyrolysis or combustion, the smoke is subsequently collected and fed through a column countercurrent to the flow of recirculating water. The resulting dilution of the condensable smoke components in water results in the removal of undesired tars and water insoluble components. Further refinement of the liquid solution is needed to isolate the water soluble organics, which contain the LS compositions used for flavoring and coloring applications.

LS compositions in the art have been produced through different methodologies, including, for example, calciner and Rapid Thermal Processing (referred to as "RTP") methods. US

Patent No. 3,106,473 to Hollenbeck describes the calciner methodology. Regarding RTP smoke collection, US Patent No. 4,876,108 to Underwood and Graham provides a description of this methodology.

LS compositions used for flavoring and coloring applications are complex and variable mixtures of chemicals and include over 400 chemical compounds. An exemplary summary of constituents found in liquid smoke is provided by Maga in "Smoke in Food Processing" CRC Press, pp. 61-68 (1968).

The color and flavor chemistry of LS compositions is highly complex as evidenced by the over four hundred compounds identified as constituents of these compositions. Due to this complexity, LS compositions are characterized by their content of certain classes of compounds, namely, acids, carbonyls, and phenols. Phenols are primarily flavoring and aroma compounds, carbonyls are mainly responsible for surface coloration, and acids are principally preservatives and pH controlling agents. Acids and carbonyls also make secondary contributions to flavor and may enhance surface characteristics of smoked meat products.

As one non-limiting example, a representative commercial LS composition may include a titratable acidity level of about 11%, about 13% carbonyls, about 1.5% phenols, and at least 70% water. The remaining constituents, about 4.5% of the total mass balance of the LS composition, include basic and neutral organic compounds.

### Preparation Of Liquid Smoke Reaction Products

The disclosed LS reaction products can be produced using a heated process step known in the art that is capable of heating a liquid to a specified temperature for a duration of time.

As claimed, the heated processing step heats the reaction solution to a temperature between 85 °C and 150°C for 5 to 120 minutes.

Preferably, the heated process step is food grade corrosion resistant and capable of agitation.

In one advantageous embodiment, a sealed reactor vessel with constant agitation is used. The rate of agitation can be greater than 5,000 Re to maintain turbulent flow in the vessel. The use of a reactor vessel with constant agitation preferably increases reactant contact and maintains product uniformity.

In certain embodiments, a sealed reactor vessel can operate at pressures between 0-689476 Pa (0-100 PSI).

The pressure depends on the amount of head space in the reactor and the reactants used during the process. Certain reactions release a high quantity of gas and create a lot of pressure and other reactions create almost no pressure.

Reaction materials may be added to a food grade heated reactor vessel, equipped with a source of heating and agitation. The reaction is carried out at a pressure of 0-689475 Pa. The reactor vessel is heated to a temperature of between about 85°C to about 150°C, preferably about 105°C to about 125°C. This temperature can be maintained for about 5 to about 150 minutes. Preferably, the temperature is maintained for about 15 minutes to about 120 minutes. During the reaction, the reaction solution is preferably constantly agitated at a rate of greater than about 5,000 Re.

In carrying out the reaction for preparing the disclosed LS reaction products, LS compositions are used as a reactant, including both calciner and RTP LS compositions. In certain embodiments, the LS composition has a carbonyl content of greater than 1% and up to about 80%.
More preferably, carbonyl content of the LS composition is greater than about 1%, up to about 50%.

In certain embodiments, a LS composition used as a reactant for preparing the disclosed LS reaction products may also have one or more of a pH less than about 7.0, an acid content less than about 25% by wt., a Brix tC greater than about 0 and less than about 85, and a phenol content greater than about 0.25 mg/ml of phenol measured by concentration of 2,6 dimethoxyphenol at 580 nm wavelength, with some LS composition reactants having a phenol content up to about 400 mg/mL.

Exemplary LS composition reactants for preparation of the disclosed LS reaction products include, but are not limited to, Zesti CODE 10, Red Arrow RA12054, Red Arrow RA95075, Zesti SUPERSMOKE 100, Red Arrow SELECT R24, which are described below:

| **Product** | **pH** | **Acidity (% w/v)** | **Phenols (mg/mL)** | **Carbonyls (mg/mL)** | **Brix tC** |
|---|---|---|---|---|---|
| Zesti CODE 10 | 2.0-2.5 | 10.5-11.0 | 12-22 | 15-25 | 28-32 |
| Red Arrow RA12054 | 2.0-3.2 | 9.0-14.0 | 10-20 | 20-40 | 33-36 |
| Red Arrow RA95075 | 2.0-2.7 | 12-20 | 24-36 | 50-80 | 60-65 |
| Zesti SUPERSMOKE 100 | 2.0-2.5 | 16.5-18.0 | 20-35 | 28-42 | 52-57 |
| Red Arrow SELECT R24 | 2.2-3.5 | 9.5-11.0 | 14-26 | 23-38 | 44-47 |
| Red Arrow RA04010 | 2.0-3.0 | 1.0-4.0 | 0-1 | 8-15 | 12-16 |

The disclosed LS reaction products may be produced through reaction of a range of concentrations of the LS and amino acid reactants, wherein the differing ratios of the reactants produce differing flavor, color, and aroma profiles. In one embodiment, the amount of the LS reactant is about 1 to about 85 % by wt. of the reaction materials. Preferably, the LS reactant is included in an amount of about 5 to about 50 % by wt. of the reaction materials. LS reactants may be used singularly, or in combinations of two or more.

Amino acids are used as reactants for production of the disclosed LS reaction products. This includes both natural and non-natural amino acids. In certain embodiments, the amino acids are Alanine, Arginine, Asparagine, Aspartic Acid, Cysteine, Glutamic Acid, Glutamine, Glycine, Leucine, Lysine, Methionine, Phenylalanine, Proline, Serine, Threonine, Tyrosine, and Valine. The amino acids reactants may be used singularly, or in combinations of two or more. The amino acids can be in provided in various forms, such as a powder or solution reagent, so that when combined with the liquid smoke reactant, the reactants undergo a maillard reaction resulting in a liquid smoke reaction product that can be applied to food and beverage products as explained herein.

In certain embodiments, the one or more amino acid reactants are added in an amount of about 0.05 to about 35 % by wt. of the reaction materials. Preferably, the one or more amino acids are used in an amount of about 0.05 to about 25 % by wt. of the reaction materials.

The reaction mixture contains water in an amount of about 20 to about 99 % by wt. of the reaction materials.

According to the claimed process the pH of the reaction mixture is less than 7.0 and may be adjusted using suitable pH adjusting agents. For example, pH adjusting agents include but are not limited to sodium hydroxide and hydrochloric acid.

The disclosed LS reaction products are prepared from only natural ingredients and solvents. The reaction mixture for producing the disclosed LS reaction products may be limited to LS condensates from pyrolysis of natural materials (e.g., wood), natural amino acids, pH adjusting agents, and water. The reaction mixture for producing the disclosed LS reaction products may exclude non-natural ingredients and solvents, including but not limited to added color, artificial flavors, and synthetic substances. The LS reaction products may also exclude any additives, including but not limited to emulsifiers and adherents.

After completion of the reaction, the LS reaction product may be used without further purification. The LS reaction product may be further processed into other forms, such as powders or dilutions. LS reaction products could be dried using any commercially available technology with or without a carrier. Carriers could include but would not be limited to maltodextrin, gum arabic, food starch, modified food starch, or malted barley flour.

### Liquid Smoke Reaction Products

As a result of the various chemical rearrangements involved in the reaction between the LS and amino acid reactants, the reaction can be driven in multiple directions based on temperature, reactant concentrations, pH, and time. As a result, the LS reaction products may exhibit an array of unique flavors with varying taste profiles, colors, and aromas.

In one embodiment, the disclosed LS reaction product has a phenol content greater than 0.25 mg/ml of phenol measured by concentration of 2,6 dimethoxyphenol at 580 nm wavelength. The disclosed LS reaction products may have a phenol content of about 400 mg/mL.

In one embodiment, the LS reaction product has a pH in the acidic range of between about 0 and about 7 and an acid content less than about 25% by wt.

In one embodiment, the LS reaction product has a carbonyl content of greater than about 1% and up to about 80% weight per unit volume (w/v).

The disclosed LS reaction products can have a range of solids content. The final solids content of a product is determined by the initial concentration of the amino acids and LS composition reactants that are used. Using a maximum carbonyl content of 80% (carbonyl concentration measured by reacted 2-butanone standard in solution at 480 nm wavelength) and a maximum amino acid content of 25%, a product would result that was a gel or fully solid, which would not be commercially viable. Maximum solids would therefore need to be determined on a case by case basis. As long as the product is minimally flowable the solids content would be acceptable. For example, in certain embodiments, a maximum of 85% brix tC is acceptable.

The disclosed LS reaction products can also exhibit a variety of colors. The LS reaction products may exhibit greater than 60 absorbance at 490 nm wavelength, using the color index method. The LS reaction products may exhibit greater than 100 absorbance at 490 nm wavelength using the color index method. The color index method is a 1 to 1000 dilution in deionized water of the product compared against a water blank at 490 nm wavelength absorbance.

Exemplary LS reaction products (LSRP) of the present disclosure include, but are not limited to, the following:

| **Product** | **pH** | **Acid (% w/v)** | **Phenols (mg/mL)** | **Carbonyls (mg/mL)** | **Brix tC** | **Color Index** |
|---|---|---|---|---|---|---|
| LSRP 1 | 1.2 | 11.4 | 17.2 | 18.4 | 40.8 | 277 |
| LSRP 2 | 3.05 | 16.2 | 33.9 | 42.6 | 72.6 | 390 |
| LSRP 3 | 2.37 | 5.6 | 5.3 | 12.5 | 16.0 | 65 |
| LSRP 4 | 4.23 | 0.5 | 3.0 | 7.1 | 10.2 | 84 |
| LSRP 5 | 3.16 | 12.3 | 14.1 | 13.7 | 47.7 | 312 |

### Application of Liquid Smoke Reaction Products

The disclosed LS reaction products are useful to impart unique flavor and aroma to a variety of food and beverage products, which are not generally limited. The food product may be a ready-to-eat ("RTE") food product. The RTE food product may include= poultry, pork, or beef. The RTE foods may also include deli meats (e.g. turkey, roast beef, ham, chicken, salami, bologna, etc.) and hot dogs.

The food product may be a ready-to-cook ("RTC") food product. The RTC food product may include poultry, pork, and beef. The RTC food product may includeground beef and par-baked dough products, such as bread and rolls. The disclosed LS reaction products can be applied to soups, sauces, dressings, baked goods, sweets, snacks, and beverages.

Methods of applying the disclosed LS reaction products are not generally limited and include methods known in the art. Conventional manufacturing processes include, for example, drenching, atomization, and showering. The disclosed LS reaction products may be used to color and flavor food products by treating the food in a variety of ways. The application of LS reaction products may be done on individual items in batch or continuous modes by spraying on dipping. For large batches, an atomized cloud of liquid smoke may be used. In addition, sausages, bologna and hams may be processed in casings into which liquid smoke solutions have been incorporated.

Drenching is one example of an external application to meat products. In this method, a solution of 5-100% LS reaction product in water could be used as the drenching solution. The drenching solution would be showered over the food surface, such as chicken breast or ham, at a constant rate. The rate of flow, dwell time, and concentration of the solution will determine the final color and flavor that is required by the producer. After the food product has been drenched, it is thermally processed to allow excess moisture to evaporate and allow the LS reaction product to bind to the outer protein surface. For example, following application of the LS reaction product, a treated food product may be baked in a convection oven for a duration of time, such as 15 minutes at 191°C.

Once the food product has been thermally processed, it will be chilled and packaged. Packaging conditions of the treated food product may be one of vacuum, non-vacuum, and modified atmospheric conditions.

LS reaction products may also be used as a flavoring agent in natural or artificial casings and nettings. The LS reaction product would be added and set uniformly into the casings according to manufacturer's processes and specifications. The casings would then be used to create sausages, deli-style meats, or other applicable encased meat products.

LS reaction products may be blended into a ground and formed meat product to add flavor and color at a usage rate of, for example, 0.05 - 5.0%. The LS reaction product may be added independently of other ingredients or maybe blended in along with wet ingredients in a standard food mixture until it is uniformly distributed into product.

In the examples presented below, various exemplary LS reaction products, conventional LS compositions and derivatives, as well as conventional reaction products were used for quantitative and qualitative tests. The results from these examples demonstrate the unique flavor and aroma profiles, color, and protein binding of the presently disclosed LS reaction products

### EXAMPLES

### Example 1

The depth of color of the disclosed LS reaction products was determined and compared with conventional alkaline or acidic LS compositions and conventional reaction flavors. To test the color imparted by these products quantitatively, a color index test that is common in the condensed natural smoke industry was used.

The color index test is carried out by diluting the test product in water, where 1 gram of test product is added to 1000 ml of distilled water. The absorbance of this solution at a wavelength of 490 nM is then measured spectrophotometrically. The absorbance values are then multiplied by 100 to generate color index numbers. Distilled water is used as the standard for the test. A high color index indicates a darker color.

Table 1 provides an overview description of the products that were color tested.

**Table 1: Quantitative and Qualitative Treatment descriptions**

| **Treatment** | **Description** |
|---|---|
| Zesti BROWN DELI | Concentrated LS, pH adjusted to 12. Used for casing and staining the surface of meat. |
| Red Arrow RA14011 | LS, higher carbonyl, pH adjusted to 12. Used in casings and staining the surface of meat. |
| LSRP 5 | LS reaction product, high carbonyl condensed LS with a pH of 3. Reacted under controlled conditions with an amino acid blend. |
| CRP 1 | Savory reaction flavor with a pH of 5, a blend of sugars and amino acids in water reacted under controlled conditions. |
| Zesti BLACK DELI | Concentrated LS, pH adjusted to 12. Used for casing and staining the surface of meat. |
| Zesti CODE 10 | Standard liquid smoke with a pH of 2.5. |

Table 2 provides color index results for the six tested materials. As shown in Table 2, the LS reaction product (LSRP 5) is compared to alkaline and standard LS, as well as a conventional reaction flavor. Each treatment below in Table 2 was selected for its use in the food industry as a staining condensed natural smoke or reaction flavor. Zesti CODE 10 was selected to give context between standard LS solutions and the technology used to create dark liquid smoke (i.e., alkalization or reaction).

**Table 2: Color Index Comparison**

| **Treatment** | **Color** | **pH** |
|---|---|---|
| Zesti BROWN DELI (Alkaline LS) | 240 | 12.7 |
| Red Arrow RA14011 (Alkaline LS) | 294 | 12.2 |
| LSRP 5 (LS Reaction Product) | 312 | 3.1 |
| CRP 1 (Conventional Flavor) | 95 | 5.1 |
| Zesti BLACK DELI (Alkaline LS) | 625 | 12.3 |
| Zesti CODE 10 (Standard LS) | 13 | 2.4 |

In Table 2, the color index score of each treatment is listed next to the pH of test product at room temperature (23°C). As shown in the Table 2 data, LSRP 5(LS reaction product) has the second highest color index rating, while still having an acidic pH. The other conventional LS compositions with comparable color ratings (Zesti BROWN DELI, Red Arrow RA14011, and Zesti BLACK DELI) have an alkaline pH greater than 12.

On the other hand, the Table 2 data demonstrates that both Zesti CODE 10 and the conventional reaction flavor CRP 1, which have acidic pH values, have less than a third of the color index score of the LS reaction product LSRP 5. As demonstrated in Table 2, the LS reaction product is unique for having both a low pH and a high color index score.

### Example 2

Color and protein binding were examined using Zesti BROWN DELI as an alkaline LS control, CRP 1 as a savory reaction control, and LSRP 5 as a LS reaction product. Color and protein binding were combined into one test due to a correlation between the amount of protein binding and the color imparted. Furthermore, if a treatment is very dark in water, but has no ability to stick to product, the functionality of that color greatly decreases.

Testing was conducted using pre-cooked, shaped, and formed deli turkey breast. The goal of this test was to examine how the LS reaction product dries and sets on a protein surface, compared with other conventional products.

All three test products were made into a 30% dilution with water. Half of each treatment was drenched for 60 seconds to have direct comparison to an untreated product. All treatments were then baked in a convection oven for 15 minutes at 375°F. All treatments were then lightly rinsed to remove excess drench fluid and vacuum packed for observation the next day.

Table 3 displays the results of each turkey breast treatment directly before cooking and after sitting overnight.

**Table 3: Protein Binding on shaped and formed turkey breast**

| **Treatment** | **Pre-cook appearance** | **Post-cook appearance** |
|---|---|---|
| Zesti BROWN DELI | Uniform cling to meat, light brown coating very little run off. | Color remained consistent with pre-cook, treatment has bound and adhered to surface of the meat. |
| CRP 1 | Semi-uniform coating, very thin pick up splotchy in sections, moderate amount of run off. | Partial adhesion of treatment, light coating has not fully bonded. Uneven splotchy coating. |
| LSRP 5 | Uniform cling to meat, heavy pick up, dark brown with minimal run off. | Very thick coating of product, surface treatment has slightly darkened post cook. Treatment is adhered to surface. |

As shown in Table 3, the exemplary LS reaction product LSRP 5 performed similarly to alkaline LS Zesti BROWN DELI, adhering to the protein surface and imparting a dark stable color to a meat surface. This result is in contrast to the reaction flavor CRP 1, which had minimal protein adhesion and a large amount of runoff.

### Example 3

A further application test was conducted on raw chicken breasts. The goal of this test was to examine and compare the adhesion of the test products on raw meat and the freeze-thaw stability of the test products. These test used Zesti BROWN DELI as an alkaline LS control, CRP 1 as a savory reaction control, and LSRP 5 as a LS reaction product test.

All three test products were diluted to 15% with water. Each treatment on the raw chicken breasts was drenched for 60 seconds. All treatments were placed on a labeled sheet pan and placed in a convection oven at 375°F. Chicken breasts were cooked until they reached an internal temperature of 166°F. The treatments were then cooled, lightly rinsed with water and evaluated for color, purge, and application adhesion. Finally, the chicken breasts were vacuum sealed, labeled, and frozen overnight. The following day the chicken breasts were thawed and evaluated for color, flavor, and application adhesion.

Observations from these tests are summarized in Tables 4 and 5.

**Table 4: Protein Binding on Raw Chicken Breast**

| **Treatment** | **Pre-cook Appearance** | **Post-cook Appearance** |
|---|---|---|
| Zesti Brown Deli | Thin, even coating, minor pooling, minor runoff. | Thin even coating adhered to protein surface, no extra runoff or purge. |
| CRP 1 | Thin, semi-even coating, Pooling on surface, moderate to severe runoff. | Coating not adhered to protein surface, treatments peel from surface when agitated. |
| LSRP 5 | Even moderate coating, minor to moderate runoff. | Moderate to thick coating adhered to protein surface, minimal runoff. |

Table 5 uses an L*a*b* scale to quantify the color on each chicken breast at the end of the cook cycle. For this test, the most important factor is the L* value, which signifies the lightness of each sample. An L* value of 0 indicates complete blackness, 100 would indicate absolute whiteness. a* and b* indicate the color spectrum, where a* (red/green) and b* (blue/yellow).

**Table 5: Protein binding - Freeze thaw adhesion and color testing on raw chicken breast**

| **Treatments** | **Post Thaw Appearance** | **Post Cook Color (L*a*b*)** |
|---|---|---|
| Zesti Brown Deli | Minimal purge, limited amount of water loss. No color loss | L*: 50.8 |
| | | a*: 8.8 |
| | | b*: 27.8 |
| CRP 1 | Moderate to severe amount of purge, color has decreased after freeze thaw, many bare spots remain | L*: 68.3 |
| | | a*: 7.8 |
| | | b*: 31 |
| LSRP 5 | Minimal to moderate amount of purge, color remains adhered. Certain sections of breast have denatured and cause minor peel off of outer chicken protein layer | L*: 40.6 |
| | | a*: 15.2 |
| | | b*: 28.4 |

As shown in Tables 4 and 5, the LS reaction product LSRP 5 performed similarly to Zesti BROWN DELI in color formation, adhesion, and freeze thaw stability. The LS reaction product LSRP 5 greatly outperformed the reaction flavor CRP 1 in all measurable categories, most importantly being application adhesion, and stability. LSRP 5 also exhibited the lowest L* value of 40.6, which indicates that it imparted the darkest color onto the meat surface.

The application tests in Examples 2 and 3 demonstrate the unique properties of the LS reaction products in terms of functionality in the food industry. As shown, the LS reaction products fit into a unique position of having the protein binding capabilities of a LS product, while also having the low flavor impact and versatility of a conventional reaction flavor.

### Example 4

The variability of flavor and aroma profiles was examined for exemplary LS reaction products. The tests and data show that differentiation of raw materials and reagent concentrations can produce variable and unique flavors, aromas, and colors, which may be tailored to fit many different flavor and aroma profiles.

Carbonyl and amino acid concentration are the two main drivers of the Maillard reactions in the disclosed LS reaction products. The impact of carbonyl and amino acid concentration on color and flavor was examined by changing the ratio of these active substrates. A range of carbonyl and amino acid concentrations were used for preparing LS reaction products, and all formulas were analyzed for flavor and color. The results demonstrate that these reactions can be customizable while still having desired functionality.

Table 6 provides results for six reactions A-F, which vary in carbonyl and amino acid content. All six of the reactions were carried out at 105°C for 60 minutes, each using Red Arrow RA95075 as the LS reactant and Lysine as the amino acid. The color index test reported in Table 6 is the same as described in Example 1.

**Table 6: Effects of LS and Amino Acid Concentration on Flavor**

| **Treatment** | **Amino Acid Content (Lysine)** | **LS Content (Red Arrow RA95075)** | **Flavor Description** | **Color Index** |
|---|---|---|---|---|
| A | 5% | 5% | Sweet brown, roast, light smoke | 70 |
| B | 5% | 10% | Strong roasted, slight bitterness char, meaty | 145 |
| C | 5% | 20% | Nutty, smoky, strong roast, bitter, burnt | 260 |
| D | 1% | 10% | Sweet, soy, char | 117 |
| E | 10% | 10% | Roast smoky, brown, savory | 156 |
| F | 15% | 10% | Roast smoky, brown, savory | 158 |

The data in Table 6 demonstrates that increasing the concentrations of LS or amino acid can change flavor from a light sweet roasted to a nuttier, bitter, burnt flavor. The data also shows that increasing the active reagents improves the color index of the products as they move closer to the equilibrium point of carbonyl and amino acid. Furthermore, once the equilibrium point is reached for the two reactants, there is less change in the color or flavor of the LS reaction product. This is demonstrated in treatments E and F, which have no difference in flavor or color.

### Example 5

The impact on flavor and aroma profile was examined when varying amino acid reactant and LS composition reactants. Table 8 shows results from combinations of two different LS composition reactants combined with 17 different amino acids. The LS composition reactants used in this example are Red Arrow RA97075 and Red Arrow RA 04010, which have chemical constituents as described below:

**Table 7: LS composition reactants**

| **Reactant** | **pH** | **Acid % (w/v)** | **Phenols (mg/mL)** | **Carbonyls (mg/mL)** | **Brix tC** |
|---|---|---|---|---|---|
| Red Arrow RA95075 | 2.0-2.7 | 12-20 | 24-36 | 50-80 | 60-65 |
| Red Arrow RA04010 | 2.0-3.0 | 1.0-4.0 | 0.25-1 | 5.0-15 | 12-16 |

All reactions took place for one hour at pH of 5 and 105°C. The reactions were completed in sealed reaction vessels at standard pressure.

**Table 8: LS and amino acid flavor differentiation and comparison**

| **Amino Acid** | **Red Arrow RA04010 combined with Amino Acid** | **Red Arrow RA95075 combined with Amino Acid** | **Red Arrow C10 Combined with Amino Acid** |
|---|---|---|---|
| Alanine | Bitter, Nutty Aroma; Smoky; Nutty | Browned/Caramelized, Smoky Aroma; Meaty; Smoky; Sweet | Caramelized, Toasted, Ash, Smoke, |
| Arginine | Burnt; Bitter; Smoky | Ashy, Smoky Aroma; Meaty; Savory; Smoky | Roast, Sweet, Smoke |
| Asparagine | Roasty, Smoky Aroma; Roasted; Smoky | Ashy, Smoky Aroma; Bready; Smoky | Toasted, Wood, Sweet Brown, Astringent |
| Aspartic Acid | Roasted, Smoky Aroma; Sweet; Vegetative | Ashy, Smoky Aroma; Crackers; Smoky | Sweet, Roasted, Ashy |
| Cysteine | Char/Roasted Turkey Meat Aroma; Charred; Meaty; Savory | Smoked, Roasted Chicken Aroma; Charred; Roasted; White Meat/Chicken | Chicken, Roast, Smoke, Dirty, Enhanced |
| Glutamic Acid | Enhanced; Meaty; Sour | Weak Smokey Aroma; Enhancement; MSG; Smoky | Roast, Savory, Smoke |
| Glutamine | Nutty Aroma; Enhancement; Nutty | Smoky Aroma; Caramelized; Smoky; Sweet | Smoke, Ash, Creosote |
| Glycine | Roasted, Vegetative Aroma; Nutty; Roasted; Smokey | Ashy, Smokey Aroma; Bready; Browned/Caramelized; Smokey | Char, Roast, Smoke, Sweet |
| Leucine | Bready, Cracker-like aroma; Bitter; Bready; Cheesy | Bready, Chocolate, Sweet Aroma; Bitter; Bready; Chocolate; Sweet | Roast, Burnt, Fermented, Mold, Cheese |
| Lysine | Smoky aroma; Crackers; Coffee; Nutty | Ashy, Smoky, Sweet Aroma; Meaty; Roasted | Char, Ash, Low Smoke |
| Methionine | Tomato, Potato Aroma; Green; Tomato; Vegetative | Potato/Tomato Aroma; Earthy; Green; Tomato; Vegetative | Yeast, Bread, Soybean, Fungi |
| Phenylalanine | Floral, Herbal Aroma; Bitter; Floral; Honey | Floral, Herbal, Honey Aroma; Bitter; Floral; Green; Herbal | Fungi, Veggie, Soy, Smoke, Ash |
| Proline | Chlorine aroma; Potato Chip; Salty; Vegetative | Bready, Toasted Aroma; Bread; Green (Lite); Toasted | Sweet, Bread, Smoke, Toasted |
| Serine | Browning, Nutty Aroma; Coffee; Nutty; Peanuts | Ashy, Smokey, Spicy Aroma; Ash (Lite); Meaty; Smoky | Savory, Bean, Soy, Smoke, Veggie |
| Threonine | Bready; Whiskey; Yeasty | Ashy, Browned, Smoky Aroma; Smokey; Sweet; | Sweet Brown, Smoke, Ash |
| Tyrosine | Bitter; Slightly Sweet | Chicken; Meaty | Bread, Smoke, Ash, Greenwood, Herb |
| Valine | Floral, Honey Aroma; Dandelion; Herbal; Yeasty | Bready, Roasted, Sweet Aroma; Bready; Roasted (Chocolate/Coffee like); Sweet | Dirty, Green, Smoke, Potato, Ash, Char |

As demonstrated in Table 8, the disclosed LS reaction products produce a variety of unique flavor and aroma profiles, not previously available from conventional reaction flavors and LS compositions.

### Example 6

Testing was conducted to demonstrate that carbonyls present in liquid smoke compositions act as reducing sugars and react with amino acids under reaction processes within the scope of the disclosure. In these experiments, three liquid smoke compositions were mixed with differing quantities and combinations of amino acids. The resulting reaction solutions were then placed in a sealed reaction vessel and heated for 1 hour at 105 °C under constant agitation. It was determined that no mass was lost or gained during the reactions and all possible products of the reactions were collected and analyzed using standard testing procedures. The results from the reactions are set forth in Tables 9, 10, and 11.

**Table 9: Red Arrow RA12054 reaction**

| **Red Arrow RA12054 reaction comparison** | **Data type** | **Formula** | **pH** | **Acid (% w/v)** | **Phenols (mg/mL)** | **Carbonyls (mg/mL)** | **Brix tC** |
|---|---|---|---|---|---|---|---|
| Red Arrow RA12054 alone | Actual | 100% RA12054 | 2 | 11.25 | 14.4 | 34.7 | 36.7 |
| RA12054 W/ amino acids | Theoretical (assuming no amino acid reaction) | 90% RA12054 | 2.6 | 10.125 | 12.96 | 31.23 | 33.03 |
| | | 7% Arginine | | | | | |
| | | 3% Lysine | | | | | |
| RA12054 W/ amino acids | Actual | 90% RA12054 | 3.16 | 12.3 | 14.1 | 13.7 | 47.7 |
| | | 7% Arginine | | | | | |
| | | 3% Lysine | | | | | |
| Difference between actual and theoretical | Differential | | 18% | 18% | 8% | -128% | 31% |

**Table 10: Zesti SUPERSMOKE 320 reaction**

| **Zesti SUPERSMOKE 320 reaction comparison** | **Data type** | **Formula** | **pH** | **Acid (% w/v)** | **Phenols (mg/mL)** | **Carbonyls (mg/mL)** | **Brix tC** |
|---|---|---|---|---|---|---|---|
| **Zesti** SUPERSMOKE 320 alone | Actual | 100% SS 320 | 2.4 | 17.3 | 26.6 | 50.4 | 63.9 |
| Zesti SUPERSMOKE 320 W/ amino acids | Theoretical (assuming no amino acid reaction) | 95% SS 320 5% Lysine | 2.7 | 16.435 | 25.27 | 47.88 | 60.705 |
| Zesti SUPERSMOKE 320 W/ amino acids | Actual | 95% SS 320 5% Lysine | 3.05 | 16.2 | 33.9 | 37.5 | 72.6 |
| Difference between actual and theoretical | Differential | | 11% | -1% | 25% | -28% | 16% |

**Table 11: Zesti CODE10 / Red Arrow RA95075 reaction**

| **Zesti CODE10 / Red Arrow RA95075 reaction comparison** | **Data type** | **Formula** | **pH** | **Acid (% w/v)** | **Phenols (mg/mL)** | **Carbonyls (mg/mL)** | **Brix tC** |
|---|---|---|---|---|---|---|---|
| Zesti CODE10 / Red Arrow | | 80% C10 | | | | | |
| RA95075 alone | Actual | 20% RA95075 | 2.3 | 12.54 | 15.968 | 30.86 | 32.92 |
| | | 77% C10 | | | | | |
| Zesti CODE10 / Red Arrow | | 15% RA95075 | | | | | |
| | Theoretical (assuming no amino acid reaction) | 4.5% Lysine | | | | | |
| RA95075 W/ amino acids | | 1.5% Cysteine | 2.7 | 11.7876 | 15.00992 | 29.0084 | 30.9448 |
| | | 77% C10 | | | | | |
| Zesti CODE10 / Red Arrow | | 15% RA95075 | | | | | |
| | | 4.5% Lysine | | | | | |
| RA95075 W/ amino acids | Actual | 1.5% Cysteine | 1.2 | 11.4 | 17.2 | 18.4 | 40.8 |
| Difference between actual and theoretical | Differential | | -125% | -3% | 13% | -58% | 24% |

As demonstrated in Tables 9, 10 and 11, carbonyls present in the liquid smoke compositions are taking place in a maillard reaction with the amino acid reactants, in the place of reducing sugars. If the carbonyls did not participate in a reaction with amino acids during the heated reaction process, then the carbonyl values would be unchanged and remain within 10% based on standard lab error. The data shows that in all three tests the carbonyls were reduced by an average of 71%. Additionally the pH, acidity, and Brix are all measurably different after the heated reaction process. These experiments thus additionally demonstrate that the reaction of the carbonyls in the liquid smoke compositions with the amino acids creates other biproducts that effect the pH and concentration.

Recitation of ranges of values herein are merely intended to serve as a shorthand method of referring individually to each separate value falling within the range, unless otherwise indicated herein, and each separate value is incorporated into the specification as if it were individually recited herein. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

## Claims

1. A process for preparing a liquid smoke reaction product, the process comprising the steps of:
(a) preparing a reaction solution comprising a liquid smoke composition and an amino acid; and
(b) heating the reaction solution to a temperature between 85°C and 150°C for 5 to 120 minutes;
wherein the liquid smoke composition has:
(i) a titratable acidity level in a concentration of less than about 25% weight per unit volume (w/v);
(ii) a carbonyl content of greater than about 1% and up to about 80% weight per unit volume (w/v);
(iii) a phenol content in a concentration of greater than about 0.25 mg/mL; and
(iv) a pH of less than about 7.0.

2. The process of claim 1, wherein the liquid smoke composition has a solids content greater than 0 and less than about 85% Brix tC.

3. The process of claim 1, wherein the liquid smoke composition in the reaction solution has a concentration of about 1% to about 85% by wt. of the reaction materials, and the amino acid in the reaction solution has a concentration of about 0.05% to about 35% by wt. of the reaction materials.

4. The process of claim 3, wherein the liquid smoke composition and the amino acid are present in the reaction solution in a concentration ratio of about 4:1 to about 2:3.

5. The process of claim 1, wherein the amino acid is a naturally occurring amino acid.

6. The process of claim 1, wherein the amino acid is selected from the group consisting of alanine, arginine, asparagine, aspartic acid, cysteine, glutamic acid, glutamine, glycine, leucine, lysine, methionine, phenylalanine, proline, serine, threonine, tyrosine, and valine.

7. The process of claim 1, wherein the amino acid is a non-naturally occurring amino acid.

8. The process of claim 1, further comprising a step of drying the reaction solution after the heating step to produce a powder.

## Patentansprüche

1. Verfahren zum Herstellen eines flüssigen Rauchreaktionsprodukts, wobei das Verfahren die folgenden Schritte umfasst:
(a) Herstellen einer Reaktionslösung, umfassend eine flüssige Rauchzusammensetzung und eine Aminosäure; und
(b) Erhitzen der Reaktionslösung auf eine Temperatur zwischen 85 °C und 150 °C während 5 bis 120 Minuten;
wobei die flüssige Rauchzusammensetzung Folgendes aufweist:
(i) einen titrierbaren Säuregehalt in einer Konzentration von weniger als etwa 25 Gew.-% pro Volumeneinheit (w/v);
(ii) einen Carbonylgehalt von mehr als etwa 1 % und bis zu etwa 80 Gew.-% pro Volumeneinheit (w/v);
(iii) einen Phenolgehalt in einer Konzentration von mehr als etwa 0,25 mg/mL und
(iv) einen pH-Wert von weniger als etwa 7,0.

2. Verfahren nach Anspruch 1, **dadurch gekennzeichnet, dass** die flüssige Rauchzusammensetzung einen Feststoffgehalt größer als 0 und kleiner als etwa 85 % Brix tC aufweist.

3. Verfahren nach Anspruch 1, wobei die flüssige Rauchzusammensetzung in der Reaktionslösung eine Konzentration von etwa 1 Gew.-% bis etwa 85 Gew.-% der Reaktionsmaterialien aufweist und die Aminosäure in der Reaktionslösung eine Konzentration von etwa 0,05 Gew.-% bis etwa 35 Gew.-% der Reaktionsmaterialien aufweist.

4. Verfahren nach Anspruch 3, wobei sich die flüssige Rauchzusammensetzung und die Aminosäure in der Reaktionslösung in einem Konzentrationsverhältnis von etwa 4:1 bis etwa 2:3 befinden.

5. Verfahren nach Anspruch 1, wobei die Aminosäure eine natürlich vorkommende Aminosäure ist.

6. Verfahren nach Anspruch 1, wobei die Aminosäure ausgewählt ist aus der Gruppe bestehend aus Alanin, Arginin, Asparagin, Asparaginsäure, Cystein, Glutaminsäure, Glutamin, Glycin, Leucin, Lysin, Methionin, Phenylalanin, Prolin, Serin, Threonin, Tyrosin und Valin.

7. Verfahren nach Anspruch 1, wobei die Aminosäure eine nicht natürlich vorkommende Aminosäure ist.

8. Verfahren nach Anspruch 1, ferner umfassend einen Trocknungsschritt der Reaktionslösung nach dem Erhitzungsschritt, um ein Pulver herzustellen.

## Revendications

1. Procédé de préparation d'un produit de réaction de fumée liquide, le procédé comprenant les étapes de :
(a) préparation d'une solution réactionnelle comprenant une composition de fumée liquide et un acide aminé ; et
(b) chauffage de la solution réactionnelle à une température comprise entre 85 °C et 150 °C pendant 5 à 120 minutes ;
dans lequel la composition de fumée liquide a :
(i) un niveau d'acidité titrable dans une concentration inférieure à environ 25 % en poids par volume unitaire (p/v) ;
(ii) une teneur en carbonyle supérieure à environ 1 % et jusqu'à environ 80 % en poids par volume unitaire (p/v) ;
(iii) une teneur en phénol dans une concentration supérieure à environ 0,25 mg/mL ; et
(iv) un pH inférieur à environ 7,0.

2. Procédé selon la revendication 1, dans lequel la composition de fumée liquide a une teneur en solides supérieure à 0 et inférieure à environ 85 % Brix tC.

3. Procédé selon la revendication 1, dans lequel la composition de fumée liquide dans la solution réactionnelle a une concentration d'environ 1 % à environ 85 % en poids des matériaux réactionnels, et l'acide aminé dans la solution réactionnelle a une concentration d'environ 0,05 % à environ 35 % en poids des matériaux réactionnels.

4. Procédé selon la revendication 3, dans lequel la composition de fumée liquide et l'acide aminé sont présents dans la solution réactionnelle dans un rapport de concentration d'environ 4:1 à environ 2:3.

5. Procédé selon la revendication 1, dans lequel l'acide aminé est un acide aminé naturel.

6. Procédé selon la revendication 1, dans lequel l'acide aminé est choisi dans le groupe constitué de l'alanine, l'arginine, l'asparagine, l'acide aspartique, la cystéine, l'acide glutamique, la glutamine, la glycine, la leucine, la lysine, la méthionine, la phénylalanine, la proline, la sérine, la thréonine, la tyrosine et la valine.

7. Procédé selon la revendication 1, dans lequel l'acide aminé est un acide aminé non naturel.

8. Procédé selon la revendication 1, comprenant également une étape de séchage de la solution réactionnelle après l'étape de chauffage pour produire une poudre.
